# EUROPEAN PATENT SPECIFICATION

(11) **EP 2 644 015 B1**
(45) Date of publication and mention of the grant of the patent: **16.01.2019**
(21) Application number: 13160801.0
(22) Date of filing: 25.03.2013
(51) Int. Cl.: A01D 34/66, A01D 34/86, A01B 63/102

(54) **Method for controlling a supported tool used within agriculture, and an unloading and control arrangement**
Verfahren und Vorrichtung zur Steuerung eines gestützten landwirtschaftlichen Werkzeugs
Procédé et appareil pour contrôler un outil agricole monté

(30) Priority: 26.03.2012 FI 20120099
(43) Date of publication of application: 02.10.2013
(73) Proprietor: Oy El-Ho Ab, 68910 Bennäs (FI)
(72) Inventor: Löfbacka, Johan, 68910 Bennäs (FI); West, Philip, 68910 Bennäs (FI); Häggblom, Karl-Erik, 68910 Bennäs (FI)
(74) Representative: Kolster Oy Ab

(56) References cited:
- WO-A1-92/11750
- FI-B- 115 750
- GB-A- 2 370 967

## Description

### Technical field

The present invention relates to an agricultural machine in the form of a method for controlling an unload and control arrangement according to the preamble of claim 1. The invention further relates to a supported tool used within agriculture according to the preamble of claim 9.

### Prior art

There is a plurality of known solutions for suspending one or more mowing units to a load-bearing frame. Thus, for instance patent publication FI115750 discloses a solution where the mowing unit is movably fastened to the load-bearing frame with at least one primarily horizontal pivot axis and supported by at least one springy element. Here, at least one of the springy elements is formed of a hydraulic or pneumatic cylinder or a bellows element whose lifting power in the working position compensates for most of the weight of the mowing unit, so that an optimal surface pressure is achieved against the ground. The mowing unit's own weight is also used for preloading the springy element with pressure.

This solution works well as long as the variations in the terrain conditions are moderate and if the working area of the mowing unit in relation to the centre line of the tractor is not changed during driving. In such conditions, it is possible to work with a nearly constant unload force in the springy element. If, by contrast, the terrain variations are great so that the angle of the lifting boom in relation to the load-bearing frame varies greatly during the work, also the effective lever arm length of the springy element varies, and thus also the unload force affecting the central fastening point of the mowing unit. If the mowing unit is side-shifted in relation to the load-bearing frame, the distance from its centre of gravity to the inner pivot axis of the lifting boom changes, and therefore also the need for unload force in the springy element.

From the Austrian manufacturer Pöttinger, a mowing machine is known which is provided with mechanical relief of the mowing units adjustable into six different positions, as well as hydropneumatic unloading. These mowing units can be side-shifted in relation to the load-bearing frame to adapt to the total working width of the mowing machine, particularly in relation to a mowing machine mounted in front of the tractor. However, the manufacturer does not generally bother with the problems of how the surface pressure of the mowing units changes when the units are side-shifted in relation to the load-bearing frame, or when the terrain varies greatly so that the effective lever arm length of the hydraulic unload cylinder changes as the work is proceeding.

As long as work is done in dry conditions on firm ground, for example on mineral soil, which is common in Central and Southern Europe, it is easier to overlook this limited capability of optimal adaptation to the ground. If, by contrast, work is done on moist organic soil, which is particularly common in those areas in Finland where keeping of cattle dominates the agriculture, it is necessary to be able to take the surface pressure of the mowing units into account. This is important both for feed-hygienic reasons and in order to minimize damages on the pasture surface. In this way, it is possible to prevent gaps from being formed where weeds quickly enter the perennial economic crops.

The known solutions have, in general, the weakness that they are only applicable either to machines with a moderate working width and low dead weight or to be used on such ground where there is no need to set the highest requirements for adaptation to the ground.

Also, these known solutions do not deal with the question of how the surface pressure is kept constant irrespective of the variations in the fastening geometry brought about when the tool follows the shapes of very uneven terrain. In some extent a solution may be found in GB 2 370 967, which presents an apparatus for use in cutting vegetation. The publication presents a tractor equipped with a cutting means pivottable and extendable horizontally in relation to the tractor by an arm. By using special determining means the horizontal extent and the downwards pressure of the cutting means are determined and adjustments of these may be applied.

Further, no solution is presented as to how the side shifting could be controlled in a simple and cost-effective manner with the mowing unit following after the tractor, so that the overlap in the working area for a mowing unit mounted in front of the tractor would remain positive even in curves.

### Presentation of the problem

The present invention allows the problems of known solutions to be substantially avoided. This task is carried out by providing a method for controlling the agricultural machine with the characterizing features of claim 1. Further, a supported tool used within agriculture is provided with the characterizing features of claim 9.

The subsequent dependent claims present appropriate further developments and variations of the invention which further improve its operation.

The primary advantage of the invention lies in achieving optimal surface pressure against the ground in a simple and reliable manner, irrespective of which positions the load-bearing frame and the mowing unit assume in relation to each other during work, and in using geometric information measured from the mountings of the mowing unit to the load-bearing frame together with information registered from the tractor and concerning the turning radius and driving speed of the tractor, in order to position the working area of the mowing unit supported behind the tractor in relation to the centre line of the tractor or in relation to the working area for a working unit mounted in front of the tractor.

### Brief description of the figures

In the following, a preferred embodiment of the invention is described with the aid of the following principled drawings, in which
Figure 1 shows a mowing machine according to the invention, provided with two mowing units and seen directly from the front with the mowing units in a normal working position;
Figure 1A shows an alternative embodiment for connecting a mowing unit to the lifting boom of the mowing machine;
Figure 2 shows a mowing machine according to Figure 1, seen from above and connected to the lifting arms of the tractor;
Figure 3 shows a more detailed view of the articulation of the right-hand side mowing unit in the driving direction to the load-bearing frame;
Figure 4 shows a detailed view of a limiting and locking device for articulation of the mowing unit on a mowing machine according to Figure 3;
Figure 5 shows a second close-up view of the right-hand side mowing unit according to Figures 3 and 4, seen obliquely from behind;
Figure 6 shows the frame of the mowing machine seen obliquely from below;
Figure 7 shows the trigonometric determination of the correction factor of the unload force;
Figure 8 shows a principled view of a mowing machine according to the invention, provided with one single mowing unit connected to a tractor, there being a front-mounted mowing unit in front the of the tractor; and
Figure 9 shows a principled hydraulic diagram for a mowing machine according to the invention.

### Preferred embodiment

The above figures do not show the unload and control arrangement in scale but only serve to illustrate structural solutions of the preferred embodiment and the operation of the embodiment. Hereby, the respective structural parts shown in the figures and denoted with reference numerals correspond to the structural solutions presented in the description below.

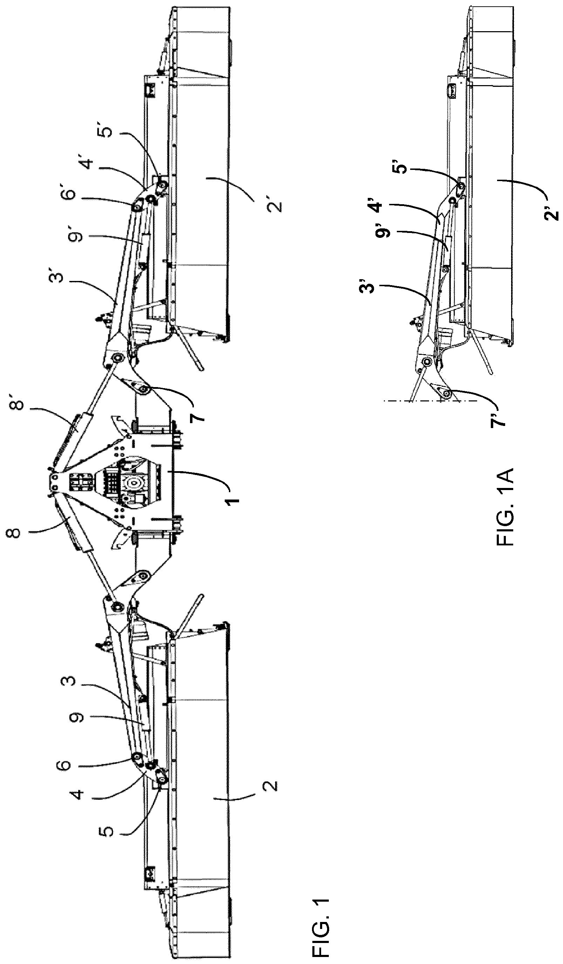

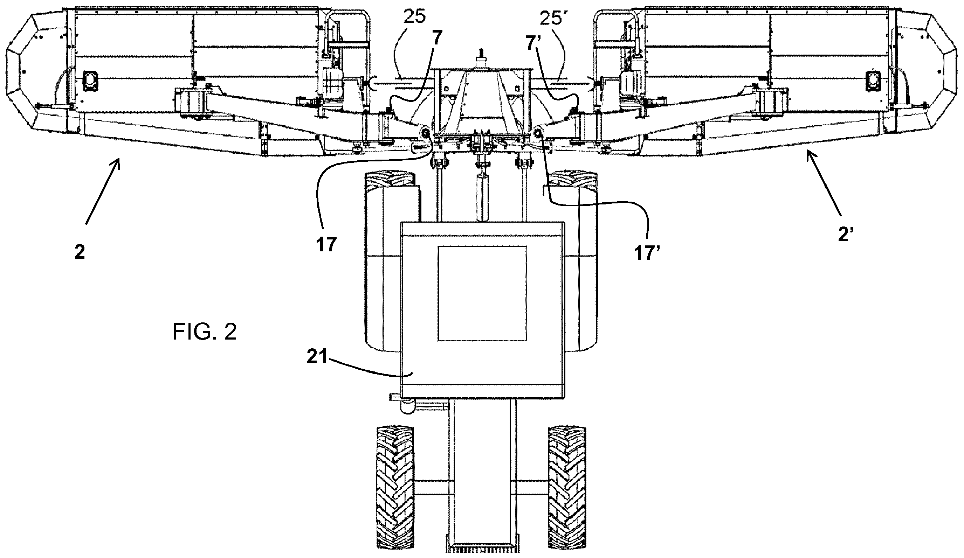

Thus, a working unit, such as a mowing machine according to Figures 1 and 2, comprises a load-bearing central frame 1 connectable to the lift arms in a tractor 21 or the like tool carrier. The central frame comprises at least a work unit attached thereto, which is exemplified in the following by a right-hand side mowing unit 2 and a left-hand side mowing unit 2'. Each mowing unit 2, 2' is fastened by a swivel joint to the load-bearing central frame 1 by means of lifting booms 3, 3' and secondary booms 4, 4' preferably arranged at the outer end of the lifting boom. These booms, in turn, comprise swivel shafts 5, 6 and 7, and correspondingly 5', 6' and 7', which are positioned substantially in parallel with the driving direction of the mowing machine. The swivel shafts 5, 5' of the mowing unit 2, 2' are hereby positioned in the upper part of the respective mowing unit and in the lateral direction in the vicinity of the centre of gravity of the mowing unit. In a second embodiment, the above-mentioned swivel shaft 6 is missing; compare with Figure 1A.

Between the load-bearing frame 1 and the corresponding lifting boom 3, 3', there is at least one springy element 8, 8' formed of a hydraulic or pneumatic cylinder or a pneumatic bellows element. The unload force in such a springy element can in the working position of the mowing unit 2, 2' compensate for most of its weight.

Between the lifting booms 3, 3' and the secondary booms 4, 4', there is a positioning element 9, 9' for shifting the outer end of the secondary booms 4, 4' relative to the central frame 1. Such shifting can be achieved by forming the secondary booms as pendulum booms which are fastened by swivel joints to the respective lifting booms with swivel shafts 6, 6' according to Figure 1. When the positioning element is activated, the pendulum booms are turned round the swivel shafts 6, 6', whereby the mowing unit 2, 2' arranged at the outer end of the pendulum boom approaches or goes farther from the central frame, depending on the direction of movement of the positioning element. Alternatively, the secondary booms may be formed of telescope booms arranged to be movable relative to the lifting boom they are arranged on; compare with Figure 1A. When the positioning element is activated, such telescope booms are shifted in substantially the longitudinal direction of the lifting boom, whereby the mowing unit 2, 2' arranged at the outer end of the telescope boom approaches or goes farther from the central frame, depending on the direction of movement of the positioning element.

The driving power of the mowing unit 2, 2' is transmitted from a split gearbox mounted on the central frame 1 to the corresponding mowing unit with telescopic drive shafts (swivel shafts) 25, 25'.

In the present preferred embodiment, the central frame 1 further comprises a position sensor, which registers the deviation of the central frame from its horizontal position.

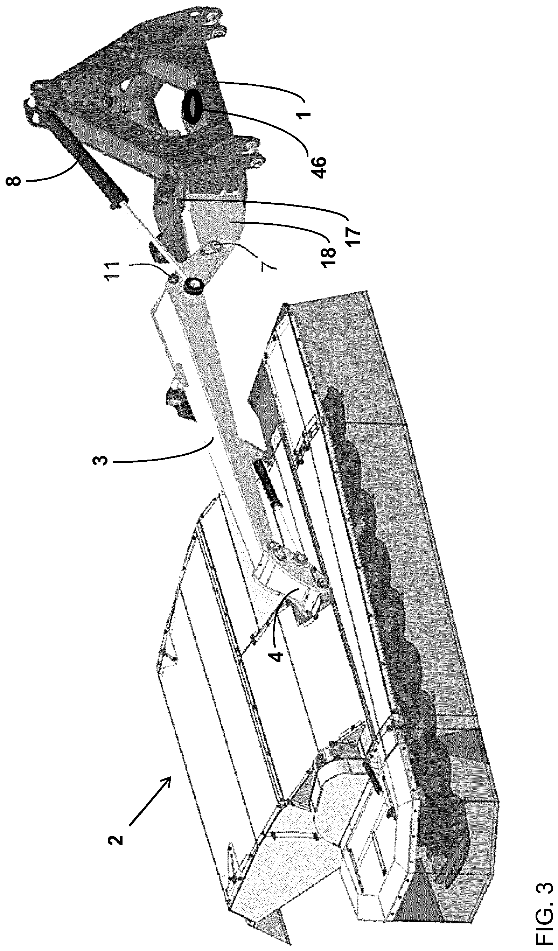

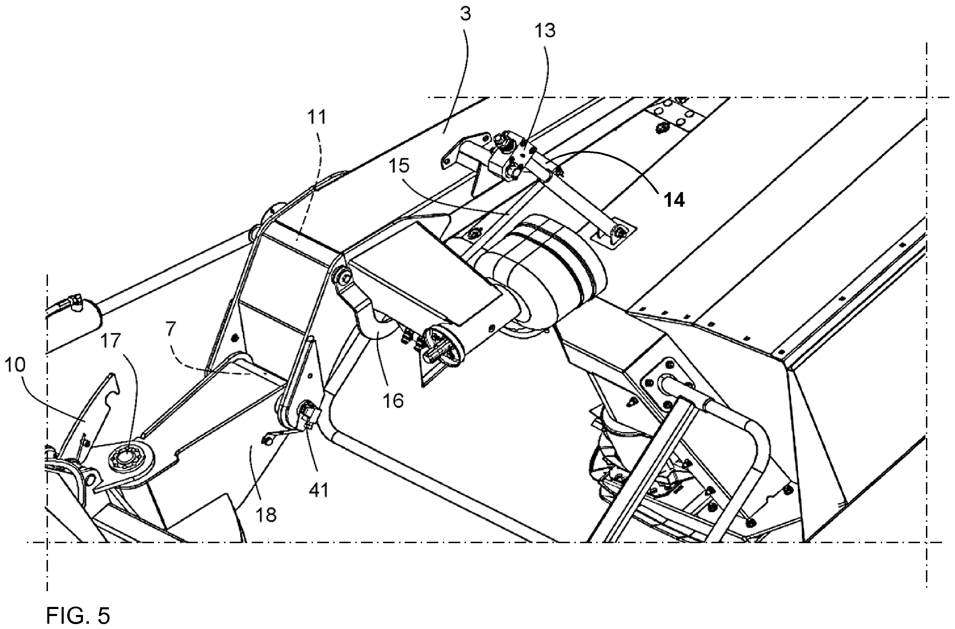

Figure 3 shows the right-hand side mowing unit seen in the driving direction and illustrated obliquely from the front. The figure also shows a transport lock shaft 11 arranged to cooperate with a transport lock 10, which is better seen in Figure 5, and arranged to lock the mowing unit 2 in its vertical transport position.

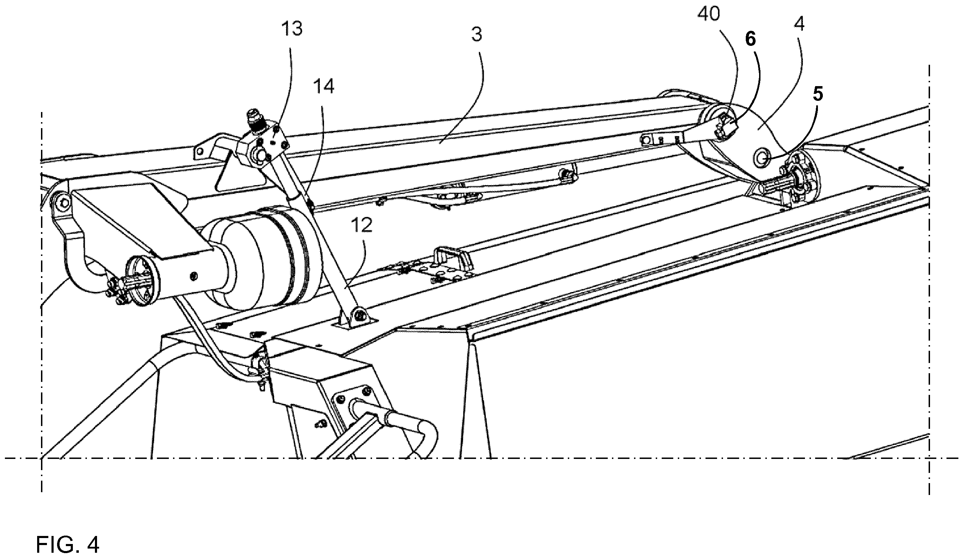

Figure 4 shows a close-up view of the above-mentioned mowing unit 2 seen directly from behind. Here, we see that the mowing unit is connected to the lifting boom 3 also with a limiting element 12. The upper end of this limiting element may glide in the fastening element 13. In the centre of the outer swivel shaft 6 of the lifting boom 3, there is a sensor 40 arranged to register the angle between the secondary boom 4 and the lifting boom 3.

Figure 5 shows a second close-up view of the right-hand side mowing unit 2 seen obliquely from behind. From the fastening element 13, a lever arm 14 extends whose lower end is fastened by a swivel joint to a bar 15. The other end of this bar is connected to the lever arm 16, which, in turn, is firmly connected to the transport lock shaft 11. In the centre of the inner swivel shaft 7 of the lifting boom 3, a sensor 41 is mounted to register an angle between the lifting boom 3 and an intermediate bearer 18, which is turnably arranged on the central frame 1 via a substantially vertical shaft 17.

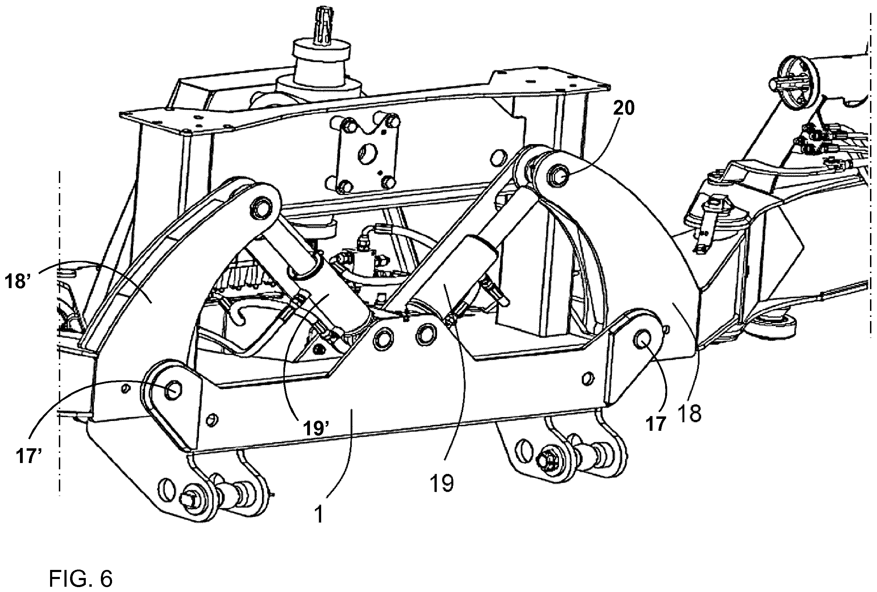

Figure 6 shows the frame 1 seen obliquely from below. The intermediate bearer 18 has a part extending behind the swivel shaft 17 in the driving direction, to the outer end of which part a double-acting cylinder 19 is fastened with a substantially vertical shaft 20. The other end of the cylinder 19 is correspondingly fastened by a swivel joint to the central frame 1. This cylinder is mainly utilized to keep the mowing unit in the working position. The cylinder is preferably also connected to the springy element 8.

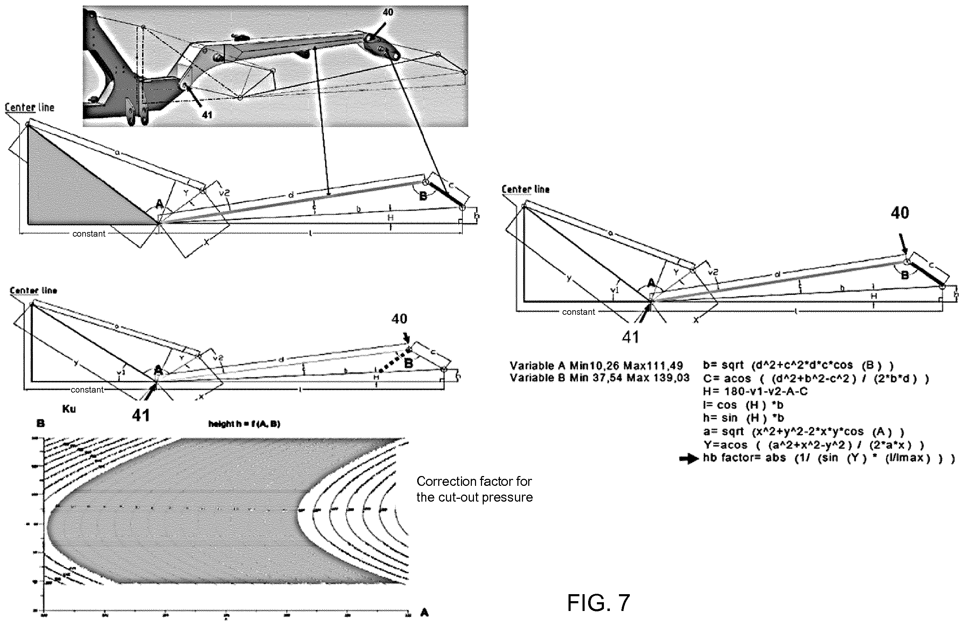

Figure 7 shows the trigonometric determination of a so-called correction factor known as such for the unload pressure "hb".

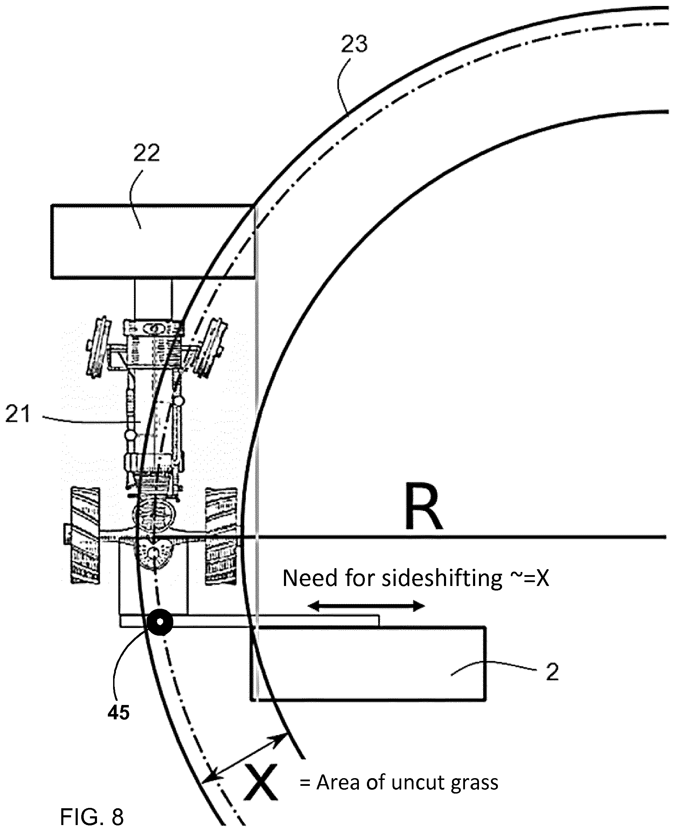

Figure 8 shows a principled view of a mowing machine according to the invention, provided with one single mowing unit 2 connected to a tractor 21. In front of the tractor, there is an additional front-mounted mowing unit 22. The curve 23 shows the border of uncut grass. The equipment also preferably comprises a GPS unit with a related antenna or signal receiver 45.

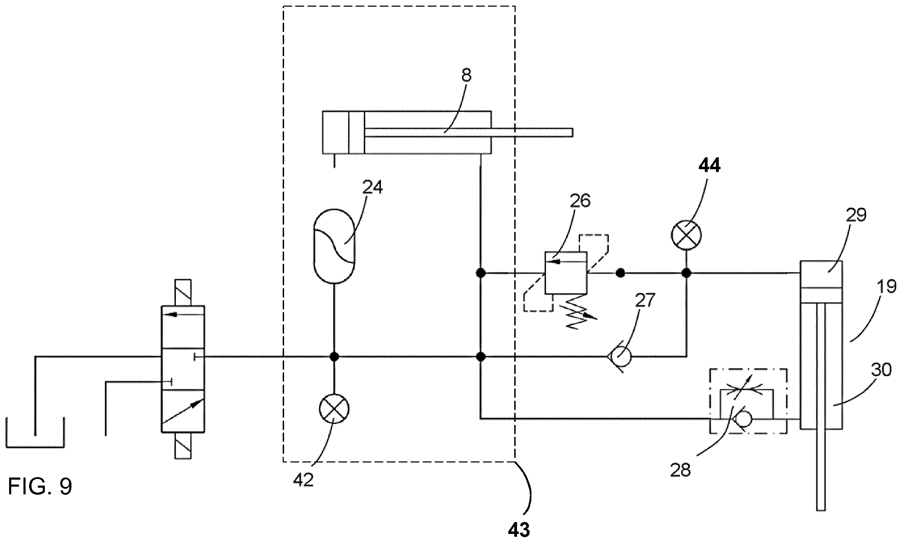

Figure 9 shows a simplified principled hydraulic diagram for the right-hand side of a mowing machine according to the present embodiment. The left-hand side of a mowing machine naturally has a corresponding construction and function. Hereby, the springy element 8 comprises a hydraulic cylinder and a related pressure accumulator 24. Further, the circuit is provided with a pressure sensor 42 for continually registering the pressure at the current moment in the unload circuit 43 formed by these parts. An electronic control unit comprised by the mowing unit can, via said pressure sensor 42, register the pressure in the unload circuit during an automatic calibration sequence where the mowing unit 2 is in the elevated working position. On the basis of this pressure registration, the electronic control unit sets an optimal unload for the mowing unit, taking into account its weight and including possible impurities and grass residues that have gathered on and in the working unit during previous work.

The above-described pressure registration may take place as well continuously as at some points in function of the position of the mowing unit 2 in relation to the load-bearing central frame 1. After this, the electronic control unit uses this stored pressure and position information as a reference for optimizing the unload pressure of the mowing unit. In this way, the mowing unit can keep an optimal surface pressure against the ground, irrespective of which positions the load-bearing central frame, the lifting boom 3 and the secondary boom 4 assume in relation to each other as the work is proceeding. At the same time as the pressure in the unload circuit is registered during the lifting and lowering movement of this automatic calibration sequence, also registration of hysteresis of the unload pressure takes place, which may be used for optimizing the unload of the mowing unit.

The piston side 29 of the double-acting cylinder 19, which in this embodiment forms the pressure side of the cylinder, is connected to the unload circuit 43 via the relief valve 26 and the check valve 27. The piston rod side 30, which in this embodiment forms the suction side of the cylinder, in the double-acting cylinder 19 controlling the intermediate bearer 18 is, in turn, connected to the same unload circuit via a one-direction restrictor valve 28. A pressure sensor 44 is arranged to register the pressure on the piston side 29 of the cylinder 19. During the on-going work, both the piston side 29 and the piston rod side 30 of the cylinder are pressurized. If the working unit hits an obstacle, the one-direction valve is arranged to allow oil to freely fill the piston rod side of the cylinder while the restrictor side of the valve is arranged to control the speed for the return of the working unit to a working position.

The construction of the mowing machine has been described above mainly with reference to the right-hand side mowing unit 2. However, it is obvious to a person skilled in the art that corresponding constructive solutions can be found in the left-hand side mowing unit 2'.

A mowing machine according to the present embodiment works in the following manner.

After the mowing units 2, 2' have been lowered to the elevated working position shown in Figure 1, i.e. to a position with ground clearance of about 0.5 m, the driver starts automatic calibration of the unload pressure of the mowing units. Then, the positioning elements 9, 9' are activated to move the secondary booms 4, 4' and thus to bring the mowing units to their respective maximum extreme positions. Subsequently, the mowing units 2, 2' are slowly lifted up by some decimetres by means of the springy elements 8, 8' and, after that, slowly lowered back to their elevated working position. During these lifting and lowering sequences, the pressure is continuously registered in the cylinder circuits with the pressure sensors 42, 42' in function of the angle registered with the sensors 41, 41' between the lifting booms 3, 3' and the intermediate bearers 18, 18'. From these registered values, including the hysteresis between the pressure in the lifting and lowering sequences, the electronic control unit of the mowing machine can calculate the total weight of the mowing units, as well as the impurities and grass residues that have gathered on and in the units during the work. The extent of the hysteresis also indicates the amount of system friction. In situations where the extent of the hysteresis deviates from a nominal value, the control unit can inform the driver about the general condition of the machine and possible need for lubrication or more thorough maintenance.

Subsequently, the mowing units are lowered to their working position, and they assume a surface pressure on a preset level, after which the mowing is started.

If, during the mowing, a situation arises where the wheels on one side of the tractor 21 drive down to a deep furrow, the central frame 1 of the mowing machine will position itself obliquely relative to the ground under the mowing unit 2 or 2'. In such a situation, the sensor 41 registers a change in the angle between the lifting boom 3, 3' and the intermediate bearer 18, 18'. The program of the control system of the mowing machine continuously calculates and updates the correction factor for the unload pressure [hb] according to the principle shown in Figure 7, so that the surface pressure of the mowing unit is kept on its preset level all the time.

Simplified, it may be said that the sensors 40, 40', 41, 41' are arranged to register geometric information between the load-bearing central frame 1, the lifting boom 3, 3' and the secondary boom 4, 4'. The electronic control unit of the mowing machine is subsequently arranged to calculate and regulate the unload pressure in the springy element 8, 8' on the basis of the geometric information registered by it. In this way, the mowing unit 2, 2' can keep an optimal surface pressure against the ground, irrespective of which positions the load-bearing central frame 1, the lifting boom 3, 3' and the secondary boom 4, 4' assume in relation to each other as the work is proceeding.

If, during the work process, the mowing machine gets to a watery area where the carrying capacity of the surface is particularly low, the driver can correct the preset level of the unload pressure in a simple manner from the control panel of the mowing machine. Correspondingly, it is naturally also possible for the drive to increase the surface pressure of the mowing unit, if required, i.e. to decrease the unload pressure of the mowing machine.

It is to be noted that the control system also keeps a manually corrected preset level for the surface pressure constant in the above manner, irrespective of how the geometric position changes of the booms and unload elements of the mowing unit 2, 2' are brought about. If, in a turn during the work process, the driver for instance side-shifts the mowing unit with the secondary boom 4, the sensors 40 and 41 will register the changes taking place in the suspension geometry of the mowing unit, after which the program of the control system continuously calculates and updates the correction factor for the unload pressure [hb], so that the surface pressure is kept on the preset level all the time, as in the cases described above.

An unload pressure stored in the pressure accumulators 24, 24' keeps the mowing units 2, 2' in the working position via the cylinders 19, 19', the intermediate bearers 18, 18' and the lifting booms 3, 3'. In a preferred embodiment, the cylinders 19, 19' and their lever arms are dimensioned in such a way that the pressure in the unload circuit 43 with the springy element 8 is sufficient to keep the mowing units 2, 2' in the working position in a moderate downward slope. The pressure sensors 44, 44' thus register a pressure which is substantially as high as the unload pressure registered by the pressure sensor 42, 42'.

If, for example, the right-hand side mowing unit 2 meets stronger resistance or obstacle, the pressure on the piston side 29 of the cylinder 19 rises. If the resistance becomes too strong, for instance when hitting a firm obstacle, the relief valve 26 opens and oil is let out to the unload circuit 43 to actively contribute to lifting the mowing unit over the obstacle when the mowing unit 2 turns away backwards. At the same time, the one-direction restrictor valve 28 allows the piston rod side 30 of the cylinder 19 to be filled with oil from the unload circuit. When the obstacle has been passed, the one-direction restrictor valve 28 limits the speed for the return movement of the mowing unit 2, so that the dangerous whiplash effect, which is usually brought about when a mowing unit reassumes the working position after running over an obstacle, is eliminated.

In an optimal embodiment, the relief valve 26 is electrically controlled. The control system continuously registers information concerning the deviation of the mowing machine from its horizontal position from the position sensor mounted on the central frame 1 and known as such. This information is used for optimizing, by means of the adjustable opening pressure of the relief valve 26, the pressure difference between the piston side 29 and the piston rod side 30, registered by the pressure sensors 42 and 44, to adjust the power of the cylinder 19 so that if the mowing unit 2 hits an obstacle, the release force of the mowing unit remains nearly constant, also in undulating terrain with great downward and upward slopes.

The pressure continuously registered in the pressure sensor 44 or alternatively the pressure difference between the pressure sensors 42 and 44 may also be used for automatically increasing the set unload pressure if the resistance of the mowing units 2, 2' in the driving direction. In this way, it becomes possible to, for example, minimize the risk of soil being mixed into the mown material if the mowing units gets to a watery area where the carrying capacity of the ground surface is particularly low.

When the mowing machine is, according to the present embodiment, in the working position and is hereby lifted up from the crop, for example when turning in the headland, the limiting elements 12, 12' limit free swinging movement of the mowing units 2, 2' around the swivel shafts 5, 5'. If the limiting elements are substantially parallel to the secondary booms 4, 4', the free swinging movement of the mowing units is kept constant irrespective of the lateral position of the mowing units, i.e. their distance from the central frame 1.

When the mowing machine is positioned in its transport position, the mowing units 2, 2' are first lifted up to a substantially vertical position by means of the lifting booms 3, 3' and the springy elements 8, 8'. Thus, the eccentric extensions of the transport lock shafts 11, 11' meet the moving transport locks 10, 10' so that they are located under the locking area of the transport lock. Subsequently, the mowing units are lowered down by retracting the positioning elements 9, 9' completely, which results in the secondary booms 4, 4' being shifted to their innermost positions. The transport height of the mowing machine is hereby minimized. At the same time, the limiting elements 12, 12' substantially parallel to the secondary booms turn the lever arms 14, 14' via their fastening elements 13, 13'. The lifting arms turn, in turn, the transport lock shafts 11, 11' via the bars 15, 15' and the lever arms 16, 16', so that their eccentric ends directed towards the transport locks allow the transport locks to turn down and lock the lifting booms 3, 3' to the transport position.

When the mowing machine is repositioned in the working position, the positioning elements 9, 9' are first activated so that the mowing units 2, 2' are lifted up and the transport lock shafts 11, 11' turn in the opposite direction. Hereby, the corresponding eccentric end of the transport shaft, which faces the transport lock, lifts the transport locks up from their locking position and releases the lifting boom from the locked transport position. Thus, the movement of the positioning element of the secondary boom 4 can be used for activating and inactivating the movable transport locks 10 of the mowing units.

In a preferred embodiment, the geometrically feasible area for lateral shift of the mowing units 2, 2' with the mowing units in the working position is smaller than their total moving area in the vertical position. In the working position, the feasible telescope movement of the drive shafts 25, 25' limits the maximum lateral shift.

With a mowing machine with a large working width, the transport height easily becomes too high when the mowing units 2, 2' are lifted to a vertical transport position. In the preferred implementation of a mowing machine according to the present embodiment, the secondary booms 4, 4' are therefore provided with a greater moving extent when the mowing units are in the transport position than when they are in the working position, since the outermost sections of the drive shafts 25, 25' are then positioned substantially perpendicularly to each other, whereby telescopic movement is minimized. The working width of the mowing units 2, 2' can thus be made nearly as great as the allowed maximum transport height.

If a machine according to the present embodiment is connected behind a tractor 21 which has another work machine 22 arranged in its front part, the control system of the machine operates in the following manner.

The working width of the front tool 22 and its distance to the rear axle of the tractor 21 in the driving direction are fed to the control system as constants, as is the distance from the mowing unit of the mowing machine mounted behind the tractor to the rear axle centre of the tractor in the driving direction. The control system also continuously registers information from the tractor on its turning radius and driving speed. Usually, this can be read in an ISOBUS-compatible tractor CAN bus (curvature, groundspeed). On the basis of these variables and the information obtained from the angle sensors 40, 40' on the lateral position of the mowing units 2, 2', the control system automatically calculates the required compensation for the positioning elements 9, 9' in turning to optimize the overlap between the working area for the front tool and the tool following behind the tractor.

Alternatively, the electronic control unit of the control system may, preferably in advance and on the basis of GPS information of the equipment and required geometric information of the tools 2, 2' and 22 mounted in front of and behind the tractor 21 and their position relative to the tractor or tool carrier, calculate and, at an appropriate moment of time, automatically correct as required the lateral position of the mowing units 2, 2' connected behind the tractor. This allows optimization of the overlap between the working area of a front tool and the mowing units connected behind the tractor or tool carrier. The antenna of the GPS unit comprised by the equipment is hereby preferably positioned above the machine to give an optimal response concerning the deviations of the tool from a straight driving line.

The above description and the related figures are only intended to illustrate the present solution for construction of an unload and control arrangement. Thus, the solution is not confined merely to the embodiments described above but a plurality of variations or alternative embodiments is feasible within the scope of the attached claims.

## Claims

1. A method for controlling a supported tool used within agriculture, which tool is connected to the lifting arms in a tractor (21) or a corresponding tool carrier and comprises at least one working unit (2, 2'), which
working unit is suspended in a springy manner to a load-bearing central frame (1), where
the working unit is movably fastened to the load-bearing central frame with a lifting boom (3, 3') and a secondary boom (4, 4') connected to the lifting boom as well as at least two horizontal swivel shafts (5, 5', 7, 7') substantially parallel to the driving direction, and
is supported by at least one springy element (8, 8'), wherein at least one of the springy elements is formed of a hydraulic cylinder connected to a pressure accumulator (24) or of a pneumatic cylinder or, alternatively, a pneumatic bellows element,
whereby the unload force of the springy element in the working position of the working unit (2) compensates for most of the weight of the working unit,
registering by sensors (40, 40', 41, 41') geometric information between the load-bearing frame (1), the lifting boom (3, 3') and the secondary boom (4), and
on the basis of this information, calculating and regulating by an electronic control unit of the working tool the unload pressure of the springy element (8), so that
the working unit (2, 2') is controlled to keep an optimal surface pressure against the ground, irrespective of which positions the load-bearing central frame (1), the lifting boom (3, 3') and the secondary boom (4, 4') assume in relation to each other during the work,
**characterized by**
registering by the electronic control unit via a pressure sensor (42) the pressure in an unload circuit (43) during an automatic calibration sequence in which the working unit (2, 2') is in the elevated working position, and
on the basis of this pressure registration, setting by the electronic control unit an optimal unload for the working unit, taking into account its weight and including possible impurities and grass residues that have gathered on and in the working unit during previous work.

2. A method for controlling a supported tool used within agriculture according to claim 1, **characterized by**
registering by the electronic control unit via a pressure sensor (42) the pressure in an unload circuit (43) during an automatic calibration sequence, whereby
the registration takes place continuously or at some points in function of the position of the working unit (2, 2') in relation to the load-bearing frame (1), after which
the electronic control unit uses this stored pressure and position information as a reference for optimizing the unload pressure, so that
the working unit keeps an optimal surface pressure against the ground, irrespective of which positions the load-bearing frame (1), the lifting boom (3, 3') and the secondary boom (4, 4,) assume in relation to each other.

3. A method for controlling a supported tool used within agriculture according to claim 1 or 2, **characterized by**
the automatic calibration sequence including a lifting and a lowering movement, and hysteresis of the unload pressure registered during this being used for optimizing the unload of the working unit.

4. A method for controlling a supported tool used within agriculture according to one or more of the preceding claims, **characterized by**
at least one cylinder (19, 19') keeping the working unit (2, 2') in a working position, while
at least one position sensor comprised by the working unit registers the deviation of the machine from its horizontal position, and
on the basis of this information, the position sensor regulates the opening pressure of the electrically controlled relief valve (26) connected to the cylinder (19, 19'), so that
when the working unit (2, 2') hits an obstacle, the release force remains nearly constant in downward and upward slopes.

5. A method for controlling a supported tool used within agriculture according to one or more of the preceding claims, **characterized by**,
if the resistance of the working unit in the driving direction increases, the unload pressure will be increased automatically.

6. A method for controlling a supported tool used within agriculture according to one or more of the preceding claims, **characterized by**
automatically correcting by an electronic unit of the working tool the lateral position of the working units (2) on the basis of information on the driving speed and turning radius of the equipment, registered from the tractor (21) or tool carrier,
to optimize the overlap between the working area of a front tool (22) and the working units (2) connected behind the tractor (21) or tool carrier.

7. A method for controlling a supported tool used within agriculture according to one or more of the claims 1 to 5, **characterized by**
the lateral position of the working units (2) connected behind the tractor being calculated in advance on the basis of required geometric information on the relation between the tools mounted in front of and behind the tractor (21) and information obtained from a GPS unit comprised by the tractor, and being automatically corrected as required at an appropriate moment of time by an electronic control unit comprised by the tool to optimize the overlap between the working area of a front tool (22) and the working units (2) connected behind the tractor (21) or tool carrier.

8. A method for controlling a supported tool used within agriculture according to claim 7, **characterized by**
positioning the GPS antenna preferably above the tool (22) to give an optimal response concerning the deviations of the tool from a straight driving line.

9. A supported tool used within agriculture, with an unload and control arrangement and at least one working unit (2, 2') suspended in a springy manner to a load-bearing central frame (1), connectable to lifting arms of a tractor (21) or a corresponding tool carrier, whereby
each working unit is movably fastened to the central frame (1) with a lifting boom (3, 3') and a secondary boom (4, 4') connected to the lifting boom as well as at least two horizontal swivel shafts (5, 5', 7, 7') substantially parallel to the driving direction, and
the working unit is supported by at least one springy element (8, 8'), wherein at least one of the springy elements is formed of a hydraulic or pneumatic cylinder or a bellows element in such a way that
the unload force of the springy element in the working position substantially corresponds to the weight of the working unit (2, 2'),
sensors (40, 40', 41, 41') arranged to register geometric information between the load-bearing frame (1), the lifting boom (3, 3') and the secondary boom (4, 4'), and
an electronic control unit to be able to calculate and regulate the unload pressure in the springy element (8, 8') on the basis of said geometric information.
**characterized in that**
the arrangement further comprises
a pressure sensor (42) arranged to register the pressure in an unload circuit (43) during an automatic calibration sequence in which the working unit (2, 2') is in the elevated working position,
the electronic control unit being arranged to set an optimal unload for the working unit on the basis of said pressure registration, hereby taking into account its weight and including possible impurities and grass residues that have gathered on and in the working unit during previous work.

10. A supported tool according to claim 9, **characterized in that**
the working unit (2, 2') is movably fastened to the load-bearing frame (1) by means of a lifting boom (3, 3') and a pendulum boom fastened by a swivel joint to the outer end of the lifting boom.

11. A supported tool according to claim 9, **characterized in that**
the working unit (2, 2') is movably fastened to the load-bearing frame (1) by means of a lifting boom (3, 3') and a telescope boom arranged slideably on the lifting boom.

12. A supported tool according to one or more of claims 9 to 11, **characterized in that**
the arrangement comprises at least one cylinder (19, 19') arranged to keep the working unit (2, 2') in the working position, which
cylinder (19, 19') is formed of a double-acting hydraulic cylinder, wherein both the piston side (29, 29') of the cylinder and the piston rod side (30, 30') thereof are pressurized during work and wherein the cylinder is further connected to a one-direction restrictor valve (28, 28'), whereby,
when the working unit hits an obstacle, the one-direction restrictor valve is arranged to allow oil to freely fill the suction side of the cylinder while the restrictor is arranged to control the speed for the return of the working unit to a working position.

13. A supported tool according to one or more of claims 9 to 12, **characterized in that**
the lateral shift of the working unit (2, 2') in the working position of the unit is smaller than its corresponding shift in a vertical transport position.

## Patentansprüche

1. Verfahren zum Steuern eines unterstützten Werkzeugs, das in der Landwirtschaft verwendet wird, wobei das Werkzeug mit den Hubarmen eines Traktors (21) oder eines entsprechenden Werkzeugträgers verbunden ist und wenigstens eine Arbeitseinheit (2, 2') umfasst, wobei
die Arbeitseinheit federnd an einem zentralen Tragrahmen (1) aufgehängt ist, wobei die Arbeitseinheit an dem tragenden zentralen Rahmen mit einem Hubausleger (3, 3') und einem mit dem Hubausleger verbundenen Sekundärausleger (4, 4') sowie wenigstens zwei horizontalen Schwenkwellen (5, 5', 7, 7') im Wesentlichen parallel zur Fahrtrichtung beweglich angebracht ist und
von wenigstens einem Federelement (8, 8') abgestützt ist, wobei wenigstens eines der Federelemente aus einem mit einem Druckspeicher (24) verbundenen Hydraulikzylinder oder einem Pneumatikzylinder oder alternativ einem pneumatischen Balgelement ausgebildet ist,
wobei die Entlastungskraft des Federelements in der Arbeitsposition der Arbeitseinheit (2) den Großteil des Gewichtes der Arbeitseinheit ausgleicht,
Erfassen von geometrischen Informationen durch Sensoren (40, 40', 41, 41') zwischen dem Tragrahmen (1), dem Hubausleger (3, 3 ') und dem Sekundärausleger (4) und,
auf der Grundlage dieser Informationen, Berechnen und Regeln des Entlastungsdrucks des Federelements (8) durch eine elektronische Steuereinheit des Arbeitsgeräts, so dass
die Arbeitseinheit (2, 2') so gesteuert wird, dass sie einen optimalen Oberflächendruck gegen den Boden beibehält, unabhängig davon, welche Positionen der zentrale Tragrahmen (1), der Hubausleger (3, 3') und der Sekundärausleger (4, 4') während der Arbeit in Bezug zueinander einnehmen,
**gekennzeichnet durch**
Erfassen des Drucks in einem Entlastungskreis (43) während einer automatischen Kalibrierungssequenz, in der sich die Arbeitseinheit (2, 2') in der angehobenen Arbeitsposition befindet, durch die elektronische Steuereinheit über einen Drucksensor (42), und,
auf der Grundlage dieser Druckerfassung, festlegen, durch die elektronische Steuereinheit, einer optimalen Entlastung für die Arbeitseinheit, wobei deren Gewicht und mögliche Verunreinigungen und Grasreste, die sich während und bei früheren Arbeiten an und in der Arbeitseinheit angesammelt haben, berücksichtigt werden.

2. Verfahren zum Steuern eines unterstützten Werkzeugs, das in der Landwirtschaft verwendet wird, nach Anspruch 1, **gekennzeichnet durch**
Erfassen des Drucks in einem Entlastungskreis (43) während einer automatischen Kalibrierungssequenz durch die elektronische Steuereinheit über einen Drucksensor (42), wobei
die Erfassung kontinuierlich oder an einigen Stellen in Abhängigkeit der Position der Arbeitseinheit (2, 2') in Bezug auf den Tragrahmen (1) erfolgt, wobei
die elektronische Steuereinheit diese gespeicherten Druck- und Positionsinformationen als Referenz zum Optimieren des Entlastungsdrucks verwendet, so dass
die Arbeitseinheit einen optimalen Oberflächendruck gegen den Boden, unabhängig davon beibehält, welche Positionen des Tragrahmen (1), der Hubausleger (3, 3') und der Sekundärausleger (4, 4) zueinander einnehmen.

3. Verfahren zum Steuern eines unterstützten Werkzeugs, das in der Landwirtschaft verwendet wird, nach Anspruch 1 oder 2, **dadurch gekennzeichnet, dass**
die automatische Kalibrierungssequenz eine Hub- und eine Senkbewegung sowie eine Hysterese des während dieser Zeit registrierten Entlastungsdrucks zur Optimierung der Entlastung der Arbeitseinheit umfasst.

4. Verfahren zum Steuern eines unterstützten Werkzeugs, das in der Landwirtschaft verwendet wird, nach einem oder mehreren der vorhergehenden Ansprüche, **dadurch gekennzeichnet, dass**
wenigstens ein Zylinder (19, 19') die Arbeitseinheit (2, 2') in einer Arbeitsposition hält, während
wenigstens ein Positionssensor, der aus der Arbeitseinheit besteht, die Abweichung der Maschine von ihrer horizontalen Position erfasst und
auf der Basis dieser Informationen der Positionssensor den Öffnungsdruck des mit dem Zylinder (19, 19') verbundenen elektrisch gesteuerten Entlastungsventils (26) erfasst, so dass,
wenn die Arbeitseinheit (2, 2') auf ein Hindernis stößt, die Auslösekraft in Steigungen nach unten und nach unten nahezu konstant bleibt.

5. Verfahren zum Steuern eines unterstützten Werkzeugs, das in der Landwirtschaft verwendet wird, nach einem oder mehreren der vorhergehenden Ansprüche, **dadurch gekennzeichnet, dass**
wenn sich der Widerstand der Arbeitseinheit in Fahrtrichtung erhöht, der Entlastungsdruck automatisch erhöht wird.

6. Verfahren zum Steuern eines unterstützten Werkzeugs, das in der Landwirtschaft verwendet wird, nach einem oder mehreren der vorhergehenden Ansprüche, **gekennzeichnet durch**
automatische Korrektur der seitlichen Position der Arbeitseinheiten (2) durch eine elektronische Einheit des Arbeitswerkzeugs auf der Grundlage von Informationen über die Fahrgeschwindigkeit und den Wendekreis des Geräts, die vom Traktor (21) oder vom Werkzeugträger erfasst werden,
um die Überlappung zwischen dem Arbeitsbereich eines Frontwerkzeugs (22) und den Arbeitseinheiten (2) zu optimieren, die hinter dem Traktor (21) oder dem Werkzeugträger angeschlossen sind.

7. Verfahren zum Steuern eines unterstützten Werkzeugs, das in der Landwirtschaft verwendet wird, nach einem oder mehreren der Ansprüche 1 bis 5, **dadurch gekennzeichnet, dass**
die seitliche Position der hinter dem Traktor angeschlossenen Arbeitseinheiten (2) im Voraus auf der Grundlage der erforderlichen geometrischen Informationen anhand der Beziehung zwischen den vor und hinter dem Traktor (21) angebrachten Werkzeugen und den von einer im Traktor befindlichen GPS-Einheit bezogenen Informationen berechnet und automatisch zu einem geeigneten Zeitpunkt von einer elektronischen Steuereinheit korrigiert wird, die das Werkzeug umfasst, um die Überlappung zwischen dem Arbeitsbereich eines Frontwerkzeugs (22) und den angeschlossenen Arbeitseinheiten (2) hinter dem Traktor (21) oder dem Werkzeugträger zu optimieren.

8. Verfahren zum Steuern eines unterstützten Werkzeugs, das in der Landwirtschaft verwendet wird, nach Anspruch 7, **gekennzeichnet durch**
Positionieren der GPS-Antenne vorzugsweise über dem Werkzeug (22), um eine optimale Antwort bezüglich der Abweichungen des Werkzeugs von einer geraden Fahrlinie zu geben.

9. In der Landwirtschaft verwendetes, unterstütztes Werkzeug mit einer Entlade- und Steueranordnung und wenigstens einer Arbeitseinheit (2, 2'), die federnd an einem zentralen Tragrahmen (1) aufgehängt ist, der mit Hebearmen eines Traktors (21) oder einem entsprechenden Werkzeugträger verbunden werden kann, wobei
jede Arbeitseinheit an dem tragenden zentralen Rahmen mit einem Hubausleger (3, 3') und einem mit dem Hubausleger verbundenen Sekundärausleger (4, 4') sowie wenigstens zwei horizontalen Schwenkwellen (5, 5', 7, 7') im Wesentlichen parallel zur Fahrtrichtung beweglich angebracht ist und
die Arbeitseinheit von wenigstens einem Federelement (8, 8') gehalten ist, wobei wenigstens eines der Federelemente aus einem Hydraulik- oder Pneumatikzylinder oder einem Balgelement derart ausgebildet ist, dass
die Entlastungskraft des Federelements in der Arbeitsposition im Wesentlichen dem Gewicht der Arbeitseinheit (2, 2') entspricht,
Sensoren (40, 40', 41, 41') angeordnet sind, um geometrische Informationen zwischen dem Tragrahmen (1), dem Hubausleger (3, 3') und dem Sekundärausleger (4, 4') zu erfassen, und
eine elektronische Steuereinheit in der Lage ist, den Entlastungsdruck in dem Federelement (8, 8') auf der Grundlage dieser geometrischen Informationen zu berechnen und zu regeln,
**dadurch gekennzeichnet, dass**
die Anordnung weiterhin umfasst:
einen Drucksensor (42) der zum Erfassen des Drucks in einem Entlastungskreis (43) während einer automatischen Kalibrierungssequenz eingerichtet ist, in der sich die Arbeitseinheit (2, 2') in der angehobenen Arbeitsposition befindet,
wobei die elektronische Steuereinheit dazu eingerichtet ist, dass sie auf der Grundlage der Druckerfassung eine optimale Entlastung für die Arbeitseinheit einstellt, wobei hier ihr Gewicht berücksichtigt wird und mögliche Verunreinigungen und Grasreste eingeschlossen sind, die sich während und bei früheren Arbeiten an und in der Arbeitseinheit angesammelt haben.

10. Unterstütztes Werkzeug nach Anspruch 9, **dadurch gekennzeichnet, dass**
die Arbeitseinheit (2, 2') mittels eines Hubauslegers (3, 3') und eines Pendelauslegers, der durch ein Drehgelenk am äußeren Ende des Hubauslegers befestigt ist, beweglich am Tragrahmen (1) befestigt ist.

11. Unterstütztes Werkzeug nach Anspruch 9, **dadurch gekennzeichnet, dass**
die Arbeitseinheit (2, 2') mittels eines Hubauslegers (3, 3') und eines am Hubausleger verschiebbar angeordneten Teleskopauslegers beweglich an dem Tragrahmen (1) befestigt ist.

12. Unterstütztes Werkzeug nach einem oder mehreren der Ansprüche 9 bis 11, **dadurch gekennzeichnet, dass**
die Anordnung wenigstens einen Zylinder (19, 19') umfasst, der dazu eingerichtet ist, die Arbeitseinheit (2, 2') in der Arbeitsposition zu halten, wobei
der Zylinder (19, 19') aus einem doppelt wirkenden Hydraulikzylinder ausgebildet ist, bei dem sowohl die Kolbenseite (29, 29') des Zylinders als auch die Kolbenstangenseite (30, 30') desselben während der Arbeit unter Druck gesetzt werden und der Zylinder weiterhin mit einem Einrichtungs-Drosselventil (28, 28') verbunden ist, wobei,
wenn die Arbeitseinheit auf ein Hindernis stößt, das Einrichtungs-Drosselventil so eingerichtet ist, dass Öl die Saugseite des Zylinders frei füllen kann, während die Drossel dazu eingerichtet ist, die Geschwindigkeit für die Rückführung der Arbeitseinheit in eine Arbeitsposition zu steuern.

13. Unterstütztes Werkzeug nach einem oder mehreren der Ansprüche 9 bis 12, **dadurch gekennzeichnet, dass**
die seitliche Verschiebung der Arbeitseinheit (2, 2') in der Arbeitsposition der Einheit kleiner ist als ihre entsprechende Verschiebung in einer vertikalen Transportposition.

## Revendications

1. Procédé de commande d'un outil supporté utilisé en agriculture,
lequel outil est relié aux bras de levage d'un tracteur (21) ou à un porte-outil correspondant et comprend au moins une unité de travail (2, 2'),
laquelle unité de travail est suspendue de manière élastique à un cadre central porteur (1), dans lequel
l'unité de travail est fixée de manière mobile au cadre central porteur à l'aide d'une flèche de levage (3, 3') et d'une flèche secondaire (4, 4') reliée à la flèche de levage, ainsi que d'au moins deux arbres pivotants horizontaux (5, 5', 7, 7') sensiblement parallèles à la direction de conduite, et
est supportée par au moins un élément élastique (8, 8'), dans lequel au moins l'un des éléments élastiques est formé d'un cylindre hydraulique connecté à un accumulateur de pression (24) ou d'un cylindre pneumatique ou, en variante, d'un élément de soufflets pneumatiques,
de sorte que la force de déchargement de l'élément élastique dans la position de travail de l'unité de travail (2) compense la majeure partie du poids de l'unité de travail, l'enregistrement par des capteurs (40, 40', 41, 41') d'informations géométriques entre le cadre porteur (1), la flèche de levage (3, 3') et la flèche secondaire (4), et
sur la base de ces informations, le calcule et la régulation par une unité de commande électronique de l'outil de travail de la pression de déchargement de l'élément élastique (8), de sorte que
l'unité de travail (2, 2') est commandée pour maintenir une pression de surface optimale contre le sol, quelles que soient les positions que le cadre central porteur (1), la flèche de levage (3, 3') et la flèche secondaire (4, 4') adoptent les uns par rapport aux autres pendant le travail,
**caractérisé par**
l'enregistrement par l'unité de commande électronique via un capteur de pression (42) de la pression dans un circuit de déchargement (43) pendant une séquence d'étalonnage automatique dans laquelle l'unité de travail (2, 2') est dans la position de travail élevée, et
sur la base de cet enregistrement de pression, l'établissement par l'unité de commande électronique d'un déchargement optimal pour l'unité de travail, en tenant compte de son poids et incluant des impuretés et résidus d'herbe potentiels qui se sont accumulés sur et dans l'unité de travail lors d'un travail antérieur.

2. Procédé de commande d'un outil supporté utilisé en agriculture selon la revendication 1, **caractérisé par**
l'enregistrement par l'unité de commande électronique via un capteur de pression (42) de la pression dans un circuit de déchargement (43) pendant une séquence d'étalonnage automatique, de sorte que
l'enregistrement s'effectue en continu ou à certains points en fonction de la position de l'unité de travail (2, 2') par rapport au cadre porteur (1), après quoi l'unité de commande électronique utilise ces informations de pression et de position mémorisées comme référence pour optimiser la pression de déchargement, de sorte que
l'unité de travail maintient une pression de surface optimale contre le sol, quelles que soient les positions que le cadre porteur (1), la flèche de levage (3, 3') et la flèche secondaire (4, 4') adoptent les uns par rapport aux autres.

3. Procédé de commande d'un outil supporté utilisé en agriculture selon la revendication 1 ou 2, **caractérisé par**
la séquence d'étalonnage automatique comprenant un mouvement de levage et d'abaissement, et l'hystérésis de la pression de déchargement enregistrée au cours de celui-ci étant utilisée pour optimiser le déchargement de l'unité de travail.

4. Procédé de commande d'un outil supporté utilisé en agriculture selon l'une ou plusieurs des revendications précédentes, **caractérisé par**
au moins un cylindre (19, 19') maintenant l'unité de travail (2, 2') dans une position de travail, alors que
au moins un capteur de position compris par l'unité de travail enregistre l'écart de la machine par rapport à sa position horizontale, et
sur la base de ces informations, le capteur de position régule la pression d'ouverture de la soupape de soulagement à commande électrique (26) connectée au cylindre (19, 19'), de sorte que
lorsque l'unité de travail (2, 2') heurte un obstacle, la force de libération reste pratiquement constante dans des pentes descendante et ascendante.

5. Procédé de commande d'un outil supporté utilisé en agriculture selon l'une ou plusieurs des revendications précédentes, **caractérisé par**,
si la résistance de l'unité de travail dans la direction de conduite augmente, la pression de déchargement va être augmentée automatiquement.

6. Procédé de commande d'un outil supporté utilisé en agriculture selon l'une ou plusieurs des revendications précédentes, **caractérisé par**
la correction automatique par une unité électronique de l'outil de travail de la position latérale des unités de travail (2) sur la base d'informations relatives à la vitesse de conduite et au rayon de braquage de l'équipement, enregistrées auprès du tracteur (21) ou du porte-outils,
pour optimiser le chevauchement entre la zone de travail d'un outil avant (22) et les unités de travail (2) connectées derrière le tracteur (21) ou le porte-outils.

7. Procédé de commande d'un outil supporté utilisé en agriculture selon l'une ou plusieurs des revendications 1 à 5, **caractérisé par le fait que**
la position latérale des unités de travail (2) connectées derrière le tracteur est calculée à l'avance sur la base d'informations géométriques requises sur la relation entre les outils montés devant et derrière le tracteur (21) et d'informations obtenues auprès d'une unité GPS comprise par le tracteur, et est corrigée automatiquement comme nécessaire à un moment approprié par une unité de commande électronique comprise par l'outil pour optimiser le chevauchement entre la zone de travail d'un outil avant (22) et les unités de travail (2) connectées derrière le tracteur (21) ou le porte-outils.

8. Procédé de commande d'un outil supporté utilisé en agriculture selon la revendication 7, **caractérisé par**
le positionnement de l'antenne GPS de préférence au-dessus de l'outil (22) pour donner une réponse optimale concernant les écarts de l'outil par rapport à une ligne de conduite droite.

9. Outil supporté utilisé en agriculture, ayant un agencement de déchargement et de commande et au moins une unité de travail (2, 2') suspendue d'une manière élastique à un cadre central porteur (1), pouvant être connecté à des bras de levage d'un tracteur (21) ou à un porte-outil correspondant, de sorte que
chaque unité de travail est fixée de manière mobile au cadre central (1) à l'aide d'une flèche de levage (3, 3') et d'une flèche secondaire (4, 4') connectée à la flèche de levage, ainsi que d'au moins deux arbres pivotants horizontaux (5, 5', 7, 7') sensiblement parallèles à la direction de conduite, et
l'unité de travail est supportée par au moins un élément élastique (8, 8'), dans lequel au moins un des éléments élastiques est formé d'un cylindre hydraulique ou pneumatique ou d'un élément de soufflets de telle sorte que
la force de déchargement de l'élément élastique dans la position de travail correspond sensiblement au poids de l'unité de travail (2, 2'),
des capteurs (40, 40', 41, 41') agencés pour enregistrer des informations géométriques entre le cadre porteur (1), la flèche de levage (3, 3') et la flèche secondaire (4, 4'), et une unité de commande électronique pour pouvoir calculer et réguler la pression de déchargement dans l'élément élastique (8, 8') sur la base desdites informations géométriques,
**caractérisé en ce que**
l'agencement comprend en outre
un capteur de pression (42) conçu pour enregistrer la pression dans un circuit de déchargement (43) pendant une séquence d'étalonnage automatique dans laquelle l'unité de travail (2, 2') est dans la position de travail élevée,
l'unité de commande électronique étant agencée pour établir un déchargement optimal pour l'unité de travail sur la base dudit enregistrement de pression, en tenant compte ainsi de son poids et incluant des impuretés et résidus d'herbe potentiels qui se sont accumulés sur et dans l'unité de travail lors d'un travail antérieur.

10. Outil supporté selon la revendication 9, **caractérisé en ce que** l'unité de travail (2, 2') est fixée de manière mobile au cadre porteur (1) au moyen d'une flèche de levage (3, 3') et d'une flèche pendulaire fixée par un joint pivotant à l'extrémité extérieure de la flèche de levage.

11. Outil supporté selon la revendication 9, **caractérisé en ce que** l'unité de travail (2, 2') est fixée de manière mobile au cadre porteur (1) au moyen d'une flèche de levage (3, 3') et d'une flèche télescopique agencée de manière coulissante sur la flèche de levage.

12. Outil supporté selon l'une ou plusieurs des revendications 9 à 11, **caractérisé en ce que**
l'agencement comprend au moins un cylindre (19, 19') agencé pour maintenir l'unité de travail (2, 2') dans le position de travail,
lequel cylindre (19, 19') est formé d'un cylindre hydraulique à double action, dans lequel le côté piston (29, 29') du cylindre et le côté tige de piston (30, 30') de celui-ci sont tous deux sous pression pendant un travail et dans lequel le cylindre est en outre connecté à une soupape de restriction unidirectionnelle (28, 28'), de sorte que, lorsque l'unité de travail heurte un obstacle, la soupape de restriction unidirectionnelle est conçue pour permettre à de l'huile de remplir librement le côté aspiration du cylindre, alors que le dispositif de restriction est conçu pour commander la vitesse de retour de l'unité de travail dans une position de travail.

13. Outil supporté selon l'une ou plusieurs des revendications 9 à 12, **caractérisé en ce que**
le décalage latéral de l'unité de travail (2, 2') dans la position de travail de l'unité est inférieur à son décalage correspondant dans une position de transport vertical.
